# EUROPÄISCHE PATENTANMELDUNG

(11) **EP 4 792 946 A1**
(43) Veröffentlichungstag der Anmeldung: **19.08.2026**
(21) Anmeldenummer: 25157354.9
(22) Anmeldetag: 12.02.2025
(51) Int. Cl.: B09B 3/30, B03B 9/06, B09B 3/40, B09B 5/00, B09B 101/40, B09B 101/45

(54) **VERFAHREN UND VORRICHTUNG ZUR AUFBEREITUNG EINES MINERALISCHEN UND GESTEINSARTIGEN AUSGANGSMATERIALS**

(71) Anmelder: Zürcher Holding GmbH, 77974 Meißenheim (DE)
(72) Erfinder: Zürcher, Ralf, 77974 Meißenheim (DE)
(74) Vertreter: mepat Patentanwälte

(57) **Zusammenfassung**

Die vorliegende Erfindung stellt ein Verfahren zur Aufbereitung eines Ausgangsmaterials (4), das zumindest eine mineralische und/oder gesteinsartige Kornfraktion aufweist, bereit, sowie eine dafür geeignete Vorrichtung. Das Verfahren umfasst die Schritte
- Vorbehandeln (V) des Ausgangsmaterials (4) zumindest durch mechanisches und/oder nassmechanisches Reinigen des Ausgangsmaterials (4) unter Abtrennen zumindest einer Abfallfraktion (6), dabei
- Erhalten zumindest einer vorgereinigten mineralischen, gesteinsartigen Kornfraktion (5) mit Schadanhaftungen aus chemischen Verbindungen, die an Oberflächen der Kornfraktion (5) gebunden und/oder in Reinigungsmedien schlecht löslich sind und sich daher durch das mechanische und/oder nassmechanische Reinigen nicht entfernen lassen. Weiter erfolgt thermisch Reinigen (T₁) der vorgereinigten Kornfraktion (5) unter Zufuhr von Luft oder Sauerstoff bei einer Temperatur im Bereich von 200 bis 800 °C, und Entfernen der Schadanhaftungen chemischer Verbindungen von den Oberflächen der Kornfraktion (5) durch Zersetzung und/oder Verbrennung: Dabei bleibt das Korngefüge der Kornfraktion (5) unverändert. Es wird eine thermisch gereinigte mineralische, gesteinsartige Kornfraktion (7) erhalten, die zur Wiederverwendung geeignet ist.

## Beschreibung

Die Erfindung betrifft ein Verfahren und eine Vorrichtung zur Aufbereitung eines Ausgangsmaterials, das mineralische und gesteinsartige Kornfraktionen aufweist.

Aus dem Stand der Technik ist bekannt, dass bei Baumaßnahmen Aushubmaterialien anfallen, die bislang je nach Herkunft und Zusammensetzung in unterschiedlicher Weise entsorgt, d. h. deponiert oder verwertet werden.

Regelmäßig fallen bei Baumaßnahmen Aushubmassen mit verschiedenen mineralischen, gesteinsartigen Einzelbestandteilen an. Die Aushubmassen, die ausgehoben, abtransportiert und entsorgt werden, umfassen in der Regel
- mineralische Gesteinsanteile wie z. B. Steinbruchmaterial und Kiesmaterial,
- künstlich hergestellte Baustoffe wie Beton, Kalk, Zement, Vlies, Geogitter,
- bindige bzw. organische Anteile wie Oberboden, Humus, Holzabfälle,
- chemische und nicht chemische Verunreinigungen, die beispielsweise Öle, Pestizide, Herbizide etc., Chlor- und Kupferhaltige Verbindungen umfassen,
- Eisen, Nickel und weitere metallische Verunreinigungen,
- Schlacke aus Stahlherstellung,
- Beimischungen aus Stahl, Papier, Kunststoff.

Insbesondere die mineralischen Gesteinsanteile und die gesteinsartigen Baustoffe wie Beton, Kalk und Zement sind Wertstoffe, die zur Weiterverwendung geeignet sind, müssen aber dafür von den Abfall- und Reststoffen separiert werden, die Baustoffe aus Kunststoffmaterial, die bindigen/organischen Anteile, Verunreinigungen, Schlacke und Beimischungen umfassen.

Bisher gibt es verschiedene anerkannte und gängige Aufarbeitungs-, Entsorgungs- und Verwertungsmöglichkeiten der Aushubmassen: Diese können zu einer Deponie transportiert und eingelagert, bzw. temporär zwischengelagert werden, oder in eine Verbrennungsanlage überführt und einer Verbrennung unterzogen werden, wobei die nicht verbrannten Rückstände, z. B. mineralische Bestandteile, Stahl etc. nach der Verbrennung ausgesondert und wieder in den Stoffkreislauf gebracht werden. Nachteilig kann dabei der Verbrennungsprozess zu Gefügeveränderungen der mineralischen, gesteinsartigen Bestandteile führen, sodass deren Verwertung dann nur begrenzt wieder möglich ist. Alternativ dazu erfolgt eine Separation der Aushubmaterialien, um Abfall- und Reststoffe von den Wertstoffen zu trennen, sodass die Abfall- und Reststoffe entsorgt und die Wertstoffe der Wiederverwendung zugeführt werden.

Die aussortierten und alternativ oder zusätzlich abgewaschenen Abfall- und Reststoffe werden einer Deponie oder der Verbrennung zugeführt, da sie für den Bau keinen sinnvollen Einsatz finden. Die beim Waschvorgang ausgesonderten Abfallstoffe sind feinkörnig und haben meistens einen kleinen Durchmesser von unter 1 mm und enthalten auch mineralische, gesteinsartige Anteile. Diese dürfen bzw. können aber wegen der relativ hohen Belastung mit Abfallstoffen nicht weiter zur Verwendung kommen, sodass eine maximale Recycling-Quote nicht erreichbar ist. In den abgetrennten Abfallstoffen enthaltene Schutt- oder Bodenmaterialien wie z. B. Sand, werden daher als nicht recyclingfähig betrachtet und durch Deponierung entsorgt.

Die Aufarbeitung der selektierten Wertstoffe, die insbesondere die gut wiederverwendbaren mineralischen oder gesteinsartigen Anteile umfassen, geschieht durch Sieben, Waschen, Fraktionieren, Brechen, Klassieren und dergleichen. Und obwohl die Aufarbeitung durch die Vorrichtungen aus dem Stand der Technik mittlerweile sehr gute Ergebnisse bietet, treten dennoch bei den so aufgearbeiteten Wertstoffen chemische Anhaftungen an den gereinigten mineralischen Körner bzw. Gesteinskörnern auf, die sich durch Waschen und Sieben nicht entfernen lassen. Art und Menge dieser Anhaftungen werden im Regelfall routinemäßig durch z. B. chemische Analysen bestimmt. Dabei handelt es sich einerseits um stark anhaftende bzw. adsorbierte Verbindungen, wie z. B. polare Phosphonsäureverbindungen, die Glyphosat und dessen Abbauprodukt AMPA (Aminomethylphosphonsäure) umfassen und weit verbreitet sind, und andererseits um schlecht lösliche und daher kaum abwaschbare Verbindungen wie polyzyklische aromatische Kohlenwasserstoffe (PAKs), die in Wasser kaum löslich sind und deren Löslichkeit in organischen Lösungsmitteln mit zunehmender Anzahl kondensierter Ringe abnimmt.

Optisch sind Anhaftungen solcher Stoffe an den gereinigten mineralischen bzw. Gesteinskörnern nicht erkennbar und können bezüglich ihrer Menge variieren. Zur Einhaltung der Grenzwerte für die stoffliche Wiederverwertung müssen jedoch diese chemischen Anhaftungen entfernt werden.

Ausgehend von diesem Stand der Technik ist es Aufgabe der vorliegenden Erfindung, ein verbessertes Verfahren bereitzustellen, das eine optimale Wiederverwertungsstufe aller mineralischer oder gesteinsartiger körniger Aushubmaterialien ermöglicht, um eine maximale Recyclingquote des Gesamtausgangsstoffes zu erreichen.

Diese Aufgabe wird durch ein Verfahren mit den Merkmalen des Anspruchs 1 gelöst.

Die weitere Aufgabe, eine Vorrichtung zur Durchführung des Verfahrens bereitzustellen, wird durch die Vorrichtung mit den Merkmalen des unabhängigen Anspruchs 10 gelöst.

Weiterbildungen bzw. bevorzugte Ausführungsformen des Verfahrens und der Vorrichtung sind in den jeweiligen Unteransprüchen ausgeführt.

Eine erste Ausführungsform des erfindungsgemäßen Verfahrens zur Aufbereitung eines Ausgangsmaterials, das zumindest eine mineralische und gesteinsartige Kornfraktion aufweist, umfasst die folgenden Schritte:
- Vorbehandeln des Ausgangsmaterials zumindest durch mechanisches und zusätzlich oder alternativ nassmechanisches Reinigen des Ausgangsmaterials unter Abtrennen zumindest einer Abfallfraktion, dabei
- Erhalten zumindest einer vorgereinigten mineralischen und gesteinsartigen Kornfraktion mit Schadanhaftungen bestehend aus chemischen Verbindungen, die adhäsiv oder adsorptiv an Oberflächen der mineralischen und gesteinsartigen Kornfraktion(en) gebunden sind, und die außerdem bzw. alternativ in Reinigungsmedien schlecht löslich sind und sich daher durch das mechanische und/oder nassmechanische Reinigen nicht entfernen lassen,
- thermisch Reinigen der vorgereinigten Kornfraktion(en) unter Zufuhr von Luft oder Sauerstoff bei einer Temperatur in einem Bereich von 200 bis 800 °C, und Entfernen der Schadanhaftungen chemischer Verbindungen von den Oberflächen der mineralischen und gesteinsartigen Kornfraktion(en) durch Zersetzung und/oder Verbrennen, wobei ein Korngefüge der mineralischen und/oder gesteinsartigen Kornfraktion(en) unverändert bleibt,
- Erhalten der thermisch gereinigten mineralischen und gesteinsartigen Kornfraktion(en), die zur Wiederverwendung geeignet ist.

Die adhäsive bzw. adsorptive Bindung der chemischen Verbindungen an der Oberfläche der mineralischen und/oder gesteinsartigen Kornfraktion(en) kann auf physikalischmechanischen oder auf chemischen, physikalischen und thermodynamischen Kräften beruhen, die zwischen den chemischen Verbindungen und der Oberfläche der mineralischen und gesteinsartigen Körner auftreten und zur Anreicherung der chemischen Verbindungen an der Kornoberfläche führen können.

"Mineralischen und/oder gesteinsartigen Kornfraktion(en)" meint hierin im Wesentlichen Kornfraktionen aus mineralischen Gesteinsanteilen und die gesteinsartigen Baustoffe wie Beton, Kalk und Zement, die Wertstoffe sind, die zur Weiterverwendung geeignet sind; mineralische Gesteinsanteile sind z. B. Steinbruchmaterial und Kiesmaterial, wie eingangs zum Stand der Technik ausgeführt. "Mineralischen, gesteinsartigen Kornfraktion(en)" umfasst dies.

Die bei der thermischen Reinigung mit der erhöhten Temperatur stattfindende Zersetzung und die alternativ oder zusätzlich stattfindende Verbrennung der chemischen Verbindungen findet entweder direkt an der Kornoberfläche statt oder nach erfolgter Verflüchtigung bzw. Desorption von der Oberfläche. Die Temperatur in einem Bereich von 200 bis 800 °C richtet sich nach der höchsten Zersetzungs- bzw. Flamm- oder Zündtemperatur der vorhandenen Schadanhaftungen, auf die das Ausgangsmaterial oder die vorgereinigten Kornfraktionen routinemäßig geprüft werden.

Gemäß einer Ausführungsform des erfindungsgemäßen Verfahrens sind die chemischen Verbindungen, die angereichert an den Kornoberflächen adhäsiv/adsorptiv anhaften und schlecht in gängigen Reinigungsmedien löslich sind, polare Phosphonsäureverbindungen, insbesondere Glyphosat und dessen Abbauprodukt Aminomethylphosphonsäure (AMPA), und/oder polyzyklische aromatische Kohlenwasserstoffe (PAK).

Bei Phosphonsäureverbindungen wie Glyphosat und AMPA beispielsweise beginnt die Zersetzung bei Temperaturen von 230 °C bzw. 286,5 °C, und viele PAK haben einen Flammpunkt unter 300 °C und einen Zündpunkt unter 700 °C. Daher ist es möglich, dass die Temperatur, die zur thermischen Reinigung von Schadanhaftungen gewählt wird, entsprechend innerhalb des Bereichs von 200 °C bis 800 °C variieren kann, je nach Art der Schadanhaftungen, d. h. ob nur Phosphonsäureverbindungen wie Glyphosat und AMPA oder nur PAK oder beide vorliegen.

So sind zur thermischen Reinigung einer vorgereinigten Fraktion mit Schadanhaftungen, die beispielsweise nur Phosphonsäureverbindungen wie Glyphosat und AMPA umfassen, Temperaturen unter 300 °C ausreichend. Ferner können bei Vorhandensein einer oder mehrerer Zündquellen Temperaturen unter 300 °C auch zur thermischen Reinigung von vorgereinigten Kornfraktionen mit Schadanhaftungen aus PAK ausreichend sein. Aber selbst ohne Zündquellen ist eine thermische Reinigung vorgereinigter Kornfraktionen mit Schadanhaftungen aus PAK möglich, wenn die Temperatur oberhalb des Zündpunkts gewählt wird, da dieser für PAK meist unterhalb einer Temperatur von 750 °C liegt, bei der eine Änderung des Korngefüges beginnt.

Nach einer noch weiteren Ausführungsform des erfindungsgemäßen Verfahrens kann die Temperatur der thermischen Reinigung in Abhängigkeit von Art und Menge der Schadanhaftungen mit der Behandlungsdauer abgestimmt sein, um sicheres Entfernen der Schadanhaftungen zu erreichen, ohne dass sich das mineralische Korngefüge der Kornfraktionen ändert. So können höhere Temperaturen bei kürzerer Behandlungsdauer eingesetzt werden, und niedrigere Temperaturen eine längere Behandlungsdauer gestatten. Dann sind bei entsprechend kurzer Behandlungsdauer Temperaturen oberhalb 750 °C möglich, bei der sonst ungewollte Gefügeänderungen beginnen.

Um Gefügeänderungen unabhängig von der Behandlungsdauer auszuschließen, liegt die Temperatur, die zur thermischen Reinigung von Schadanhaftungen gewählt wird, gemäß einer weiteren Ausführungsform des erfindungsgemäßen Verfahrens in einem Bereich von 200 bis 700 °C, bevorzugt in einem Bereich von 200 bis 600 °C.

Nach einer noch weiteren Ausführungsform des erfindungsgemäßen Verfahrens kann abhängig von der Art der Schadanhaftungen bzw. deren Zersetzungs- bzw. Verbrennungstemperatur diese Temperatur in einem Bereich von 300 bis 800 °C liegen. Die gewählte Temperatur kann auch in einem Bereich von 300 bis 700 °C, oder 300 bis 600 °C liegen.

Schließlich kann nach einer noch weiteren Ausführungsform des erfindungsgemäßen Verfahrens ebenfalls abhängig von der Art der Schadanhaftungen bzw. von deren Zersetzungs- bzw. Verbrennungstemperatur die zur thermischen Reinigung von Schadanhaftungen gewählte Temperatur auch in einem Bereich von 400 bis 600 °C liegen, um auch Schadanhaftungen mit entsprechenden Zersetzungs- bzw. Verbrennungstemperaturen sicherer zu entfernen.

Ferner kann gemäß einer noch weiteren Ausführungsform des erfindungsgemäßen Verfahrens das Vorbehandeln des Ausgangsmaterials zumindest einen Bearbeitungs- bzw. Behandlungsschritt aus der Gruppe umfassen, die die Behandlungen Sieben, Fraktionieren, Brechen und Klassieren enthält. Werden dabei mehrere vorgereinigte mineralische, gesteinsartige Kornfraktionen mit unterschiedlichen Korngrößen erhalten, können diese entweder zusammen oder nach Fraktionen getrennt der thermischen Reinigung unterzogen werden. Bei getrennter thermischer Reinigung kann dann die Behandlungstemperatur und/oder eine Behandlungszeit an die Korngröße der jeweiligen Kornfraktion angepasst werden.

Dabei kann die zumindest eine durch das mechanische und/oder nassmechanische Reinigen in der Vorbehandlung abgetrennte Abfallfraktion in einer weiteren Ausführungsform eine mineralische und gesteinsartige Feinfraktion und zumindest einen nicht wiederverwendbaren Abfallstoff mit einer Korngröße aufweisen, die kleiner ist als eine Korngröße der vorgereinigten Kornfraktion(en).

Die nicht wiederverwendbaren Abfallstoffe der Abfallfraktion, die sich durch das mechanische und/oder nassmechanische Reinigen entfernen lassen, umfassen z. B. organische Bodenmaterialien, Leichtbaustoffe wie Porenbeton, Kunststoff und umweltschädliche und/oder gefährliche Schadstoffe aus der Gruppe umfassend Lösungsmittel, Öle, Lacke, Chlor- oder Fluorverbindungen und Pestizide etc., die anders als die vorgenannten Schadanhaftungen nicht adhäsiv oder adsorptiv an die Oberflächen der mineralischen und/oder gesteinsartigen Kornfraktion gebunden und/oder in Reinigungsmedien löslich sind.

Dabei enthalten vor allem Abfallfraktionen mit einer Kornobergrenze von 1 mm einen großen Anteil solche Abfallstoffe.

Gemäß einer weiteren Ausführungsform umfasst das Verfahren zusätzlich das thermisch Reinigen der zumindest einen Abfallfraktion unter Zufuhr von Luft oder Sauerstoff bei einer Temperatur, die zur Verbrennung des zumindest einen nicht wiederverwendbaren Abfallstoffs, bevorzugt in einem Bereich von 800 bis 1.200 °C, ausgewählt ist. Hierbei wird aus einem Verbrennungsrückstand eine thermisch gereinigte Feinfraktion erhalten, die arm an oder frei von dem zumindest einen nicht wiederverwendbaren Abfallstoff ist.

Damit kann auch die Feinfraktion einer Wiederverwendung zugeführt oder einfach auf einer Deponie entsorgt werden.

Gemäß einer noch weiteren Ausführungsform des erfindungsgemäßen Verfahrens wird das thermische Reinigen der vorgereinigten Kornfraktion in einem kontinuierlich oder chargenweise betriebenen thermischen Reinigungsmodul durchgeführt.

Auch das thermische Reinigen der zumindest einen Abfallfraktion kann in einem kontinuierlich oder chargenweise betriebenen thermischen Reinigungsmodul durchgeführt werden. Hierbei kann das thermische Reinigen der zumindest einen Abfallfraktion in demselben kontinuierlich oder chargenweise betriebenen thermischen Reinigungsmodul abwechselnd bzw. sukzessive mit dem thermischen Reinigen der vorgereinigten Kornfraktion unter Einstellung der Temperatur in dem jeweils vorgesehenen Bereich erfolgen. D. h. das thermische Reinigungsmodul wird wechselweise mit den Parametern betrieben, die jeweils für die thermische Reinigung der vorgereinigten Kornfraktion und der Abfallfraktion vorgesehen sind. Diese Parameter können neben der Temperatur, die beispielsweise durch Steuerung einer Brenneranzahl, Brennstoffzufuhr und/oder Luft-/Sauerstoffzufuhr eingestellt werden kann, auch die Behandlungsdauer umfassen.

Ferner ist es alternativ dazu möglich, dass das thermische Reinigen der zumindest einen Abfallfraktion in einem zweiten kontinuierlich oder chargenweise betriebenen thermischen Reinigungsmodul durchgeführt wird, quasi parallel zur thermischen Reinigung der vorgereinigten Kornfraktion in einem ersten thermischen Reinigungsmodul. Dann wird das erste thermische Reinigungsmodul mit den für die vorgereinigte Kornfraktion vorgesehenen Parametern betrieben, und das zweite thermische Reinigungsmodul mit den für die Abfallfraktion vorgesehenen Parametern.

Nach noch weiteren Ausführungsfomen des erfindungsgemäßen Verfahrens wird im kontinuierlichen Betrieb die vorgereinigte Kornfraktion durch das thermische Reinigungsmodul gefördert, das als Drehrohrofen oder als Durchlaufofen mit einer Fördervorrichtung ausgebildet ist, die ein Wanderrost, ein Treppenrost, ein Schüttrost oder ein Walzenrost ist. Und im chargenweisen Betrieb kann die vorgereinigte Kornfraktion in dem thermischen Reinigungsmodul umgewälzt werden, das als Ofenvorrichtung bevorzugt mit einer Vorrichtung zur Umwälzung der vorgereinigte Kornfraktion ausgebildet ist. Durch die Förderung bzw. Umwälzung wird eine gleichmäßige Erhitzung der Kornfraktionen und damit vollständige Entfernung der Schadanhaftungen von den Kornoberflächen erreicht.

Eine zur Durchführung des erfindungsgemäßen Verfahrens geeignete und dazu ausgebildete erfindungsgemäße Vorrichtung zur Aufbereitung eines Ausgangsmaterials, das zumindest eine mineralische und/oder gesteinsartige Kornfraktion aufweist, hat ein thermisches Reinigungsmodul, das so gestaltet ist, dass zumindest eine vorgereinigte Kornfraktion unter Zufuhr von Luft oder Sauerstoff bei einer Temperatur in einem Bereich von 200 bis 800 °C durch Zersetzung oder Verbrennung der Schadanhaftungen chemischer Verbindungen von den Oberflächen der Kornfraktion thermisch gereinigt wird. Dazu wird das thermische Reinigungsmodul einem Vorbehandlungsmodul direkt oder indirekt nachgeschaltet, das dazu ausgebildet ist, die zumindest eine vorgereinigte Kornfraktion zumindest durch mechanisches und/oder nassmechanisches Reinigen des Ausgangsmaterials unter Abtrennen zumindest einer Abfallfraktion bereitzustellen.

"Direkt nachgeschaltet" bedeutet, dass das thermische Reinigungsmodul in örtlicher Nähe zu dem Vorbehandlungsmodul installiert ist bzw. wird. Alternativ dazu bezieht sich die "indirekte Nachschaltung" darauf, dass sich das thermische Reinigungsmodul nicht an demselben Standort befindet wie das Vorbehandlungsmodul. Der Unterschied zwischen beiden Varianten besteht folglich in der Überführungsdistanz zwischen dem Vorbehandlungsmodul und dem thermischen Reinigungsmodul, und entsprechend in einer jeweiligen Überführungsvorrichtung. Für kurze Überführungsdistanzen bei direkter Nachschaltung können als Überführungsvorrichtungen Förderanlagen wie beispielsweise Förderbänder oder -schnecken, Becherwerke, Trogkettenförderer etc., sowie Fördermittel wie Kräne oder Bagger eingesetzt werden. Für größere Überführungsdistanzen bei indirekter Nachschaltung umfassen die Überführungsvorrichtungen vor allem Fahrzeugsysteme des Güterverkehrs mit angetriebenen oder antriebslosen Transporteinheiten, wie z. B. Lastkraftwagen oder Materialwagen eines Güterzugs.

Dabei weist das thermische Reinigungsmodul gemäß einer weiteren Ausführungsform der erfindungsgemäßen Vorrichtung eine Heizvorrichtung mit oder ohne Zündquelle und eine Zufuhrvorrichtung für Luft oder Sauerstoff auf und ist zum kontinuierlichen oder chargenweisen Betrieb ausgebildet. Ob eine Heizvorrichtung mit oder ohne Zündquelle eingesetzt wird, kann von der Art der chemischen Anhaftungen abhängen. Liegt die Behandlungstemperatur oberhalb der Flammtemperatur, aber unterhalb einer Zündtemperatur der Schadanhaftungen, ist eine Zündquelle erforderlich. Liegt die Behandlungstemperatur oberhalb der Zündtemperatur, kann auf eine Zündquelle verzichtet werden.

Nach einer noch weiteren Ausführungsform der erfindungsgemäßen Vorrichtung ist das thermische Reinigungsmodul zum kontinuierlichen Betrieb als Drehrohrofen oder als Durchlaufofen mit einer Fördervorrichtung ausgebildet, die ein Wanderrost, ein Treppenrost, ein Schüttrost oder ein Walzenrost ist. Zum chargenweisen Betrieb kann der Ofen mit einer Vorrichtung zur Umwälzung der vorgereinigten Kornfraktion ausgebildet sein.

Ferner kann das thermische Reinigungsmodul gemäß einer noch weiteren Ausführungsform ein zumindest hinsichtlich der Temperatur steuerbares thermisches Reinigungsmodul sein. Es kann dazu ausgebildet sein, die zumindest eine Abfallfraktion unter Zufuhr von Luft oder Sauerstoff bei einer Temperatur, die zur Verbrennung des nicht wiederverwendbaren Abfallstoffs, bevorzugt in einem Bereich von 800 bis 1.200 °C, ausgewählt ist, um durch Verbrennung der Abfallstoffe thermisch zu reinigen. Ein solches thermisches Reinigungsmodul kann wahlweise zum Verbrennen der vorgereinigten Kornfraktionen(en) oder zum Verbrennen der Abfallfraktion eingesetzt werden, wobei das thermische Reinigungsmodul jeweils mit den Parametern betrieben wird, die für die thermische Reinigung der vorgereinigten Kornfraktion oder der Abfallfraktion vorgesehen sind.

Alternativ dazu ist es möglich, dass die Vorrichtung ein zweites thermisches Reinigungsmodul aufweist, das dem Vorbehandlungsmodul direkt oder indirekt nachgeschaltet ist und dazu ausgebildet ist, die zumindest eine Abfallfraktion unter Zufuhr von Luft oder Sauerstoff bei einer Temperatur, die zur Verbrennung des nicht wiederverwendbaren Abfallstoffs, bevorzugt in einem Bereich von 800 bis 1.200 °C, ausgewählt ist, durch Verbrennung der Abfallstoffe thermisch zu reinigen.

Weitere Ausführungsformen der erfindungsgemäßen Vorrichtungen und des Verfahrens sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: schematisch den Verfahrensablauf der Aufbereitung von mineralischen und gesteinsartigen körnigen Ausgangsmaterialien,
- **Fig. 2**: eine schematische Seitenansicht einer Aufbereitungsvorrichtung zur Durchführung des Verfahrens,
- **Fig. 3**: schematisch einen weiteren Verfahrensablauf bei der Aufbereitung der mineralischen oder gesteinsartigen körnigen Ausgangsmaterialien,
- **Fig. 4**: eine schematische Seitenansicht einer weiteren Aufbereitungsvorrichtung zur Durchführung des Verfahrens.

Mit dem erfindungsgemäßen Verfahren gelingt die Aufbereitung von mineralischen und gesteinsartigen körnigen Ausgangsmaterialien einschließlich der Dekontamination der mineralischen gesteinsartigen Ausgangs- bzw. Aushubmaterialien. Das Verfahren ist mit einer Aufbereitungsvorrichtung durchführbar, die ein thermisches Reinigungsmodul aufweist.

Nach Selektion und anschließender Aufbereitung einer oder mehrerer mineralischer oder gesteinsartiger Kornfraktion(en) der Aushubmaterialien durch zumindest einen mechanischen und/oder nassmechanischen Reinigungsschritt wird eine gezielte Erhitzung der mineralischen oder gesteinsartigen Körnung durchgeführt, um organische Bestandteile, chemische Verunreinigungen und bindige Anteile durch Zersetzung, Verflüchtigung und/oder Verbrennung zu beseitigen.

Die Temperatur wird dabei so gewählt, dass auch das anhaftende Schadmaterial mit der höchsten Zersetzungstemperatur zersetzt, bzw. der höchsten Flammtemperatur (bei Vorliegen einer Zündquelle) oder mit der höchsten Zündtemperatur (d. h. ohne Zündquelle) verbrannt wird. Für die gängigen Schadstoffe, auf die die Anhaftungen in der routinemäßig durchgeführten chemischen Analyse geprüft werden, sind Flamm-, Zünd- bzw. Zersetzungstemperaturen bekannt und in entsprechenden Datenblättern zu finden. Apparativ wird dazu im Nachgang zu einem mechanischen bzw. nassmechanischen Reinigungsmodul im Aufarbeitungsprozess zusätzlich ein thermisches Reinigungsmodul verbaut und eingesetzt. Anders als bei den bisher üblichen Verbrennungsprozessen, bei denen die mineralische Aushubmasse komplett der Verbrennungsanlage zugeführt wird, wird das Gefüge des verwertbaren Materials hierbei nicht negativ verändert, sodass deren Verwertung nicht eingeschränkt wird.

Denn im Stand der Technik sind Verbrennungsanlagen für mineralische Zwecke so ausgelegt, dass z. B. teerhaltiger Asphalt in großen Mengen verbrannt werden kann, da hier keine Aufarbeitung durch Waschen, Sieben und Brechen möglich ist. Die vorhandenen, an zentralen Stellen eines Landes angeordneten Anlagen sind für sehr hohe Durchsatzmengen von ca. 300 t/h ausgelegt und werden mit hohen Temperaturen betrieben, um sicher eine vollständige Verbrennung zu erreichen. Bei den nichtbrennbaren mineralischen und gesteinsartigen Anteilen führt dies zu den genannten nachteiligen Gefügeänderungen, die die Wiederverwendung beschränken.

Erfindungsgemäß findet bei dem Erhitzungsprozess durch Anpassung der Temperatur gezielt nur die Verbrennung der anhaftenden Verunreinigungen statt, die nach der mechanischen und nassmechanischen Vorreinigung an der Körnung verbleiben. Das Gefüge des Grobkorns wird nicht verändert, da die Behandlungstemperatur so gewählt wird, dass die anhaftenden Stoffe während der Behandlungszeit im thermischen Reinigungsmodul entfernt werden, ohne das Gefüge des mineralischen oder gesteinsartigen Materials zu verändern.

Mit dem thermischen Behandlungsmodul können zukünftig Verwertungsanlagen leichter und kompakter gebaut werden, oder bestehende Anlagen, die bereits Sortier-, Wasch-, Sieb- und Brechvorrichtungen umfassen, nachgerüstet werden. Aufgrund kleinerer Durchsatzmengen mit kürzerer Behandlungszeit und der angepassten Temperatur ist ein dezentraler Aufbau und Betrieb von thermischen Modulen in der Nähe bestehender Recyclinganlagen oder direkt nachgeschaltet wirtschaftlich möglich. Mit der kürzeren Behandlungszeit und dem Entfall der Transportwege zu den zentralen groß dimensionierten Verbrennungsanlagen wird die CO₂ Bilanz bei der Verwertung durch das Verfahren verbessert.

Einsatzgebiete für die gereinigten Stoffe sind beispielsweise Frostschutzkies, Tragschichten verschiedenster Sieblinien, Betonzuschlagstoffe etc. als jegliche mineralische oder gesteinsartige Körnung, und können durch die zusätzliche thermische Reinigungsstufe erheblich erweitert werden.

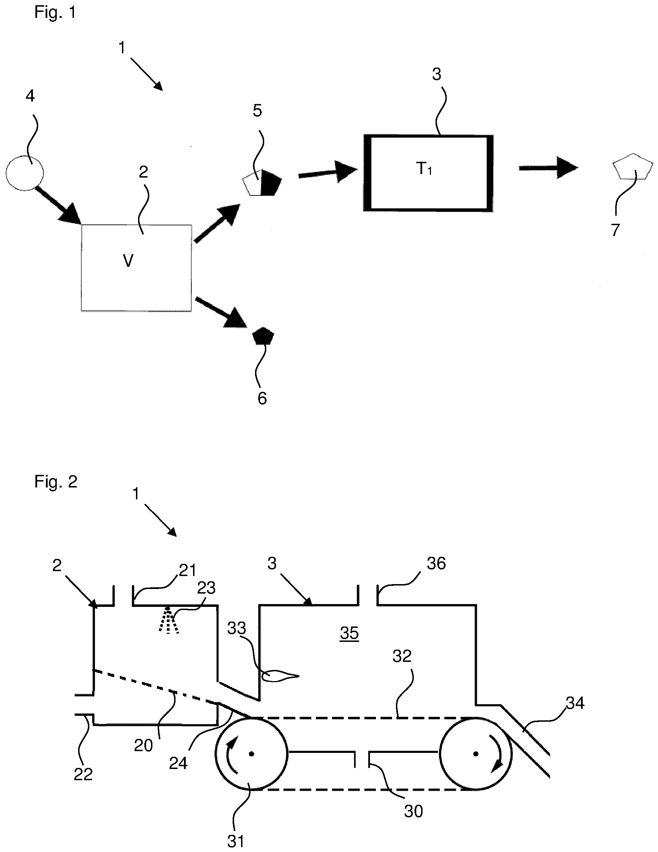

Mit der Darstellung in Fig. 1 wird das Verfahren mit einer schematischen/symbolischen Vorrichtung 1 skizziert. In einem Vorbehandlungsmodul 2 umfasst die Vorbehandlung V des Ausgangsmaterials 4, das mineralische, gesteinsartige Kornfraktionen umfasst, zumindest einen mechanischen und/oder nassmechanischen Reinigungsschritt, mit dem zumindest eine Abfallfraktion 6, die Abfallstoffe und eine mineralische bzw. gesteinsartige Feinfraktion unter 1 mm umfasst, von den mineralischen, gesteinsartigen Kornfraktionen 5 mit größeren Korngrößen abgetrennt werden. Außer der mechanischen und/oder nassmechanischen Reinigung kann die Vorbehandlung des Ausgangsmaterials 4 je nach Zusammensetzung und Art ferner auch bekannte Schritte wie Sortieren, Trennen, Brechen, Klassieren, Fraktionieren, Sieben, etc. umfassen.

Aus der Vorbehandlung werden vorgereinigte Kornfraktionen 5 mit Schadanhaftungen erhalten, die bei der Abtrennung der Abfallfraktion 6 mit den nicht verwertbaren Abfallstoffen im Vorbehandlungsmodul 2 nicht von den Kornoberflächen entfernt werden konnten. Die vorgereinigte Kornfraktionen 5 durchläuft das thermische Reinigungsmodul 3, das zur thermischen Reinigung T₁ mit einer Behandlungstemperatur und einer Behandlungszeit betrieben wird, bei der die Schadanhaftungen entfernt bzw. verbrannt und auf diese Weise thermisch gereinigte Kornfraktionen 7 ohne Gefügeänderungen erhalten werden, die frei von Anhaftungen geeignet zur Wiederverwendung sind. Denn bei der thermischen Reinigung T₁ zum Entfernen der Schadanhaftungen aus z. B. polaren Phosphonsäureverbindungen wie Glyphosat und AMPA, deren Zersetzungstemperaturen bei 230 °C bzw. 286,5 °C liegen, und/oder PAK, deren Flammpunkt meist unter 300 °C und Zündpunkt unter 700 °C liegt, reichen Temperaturen unter 700 °C aus, um Änderungen des mineralischen Korngefüges, die bei 750 °C beginnen, sicher zu vermeiden.

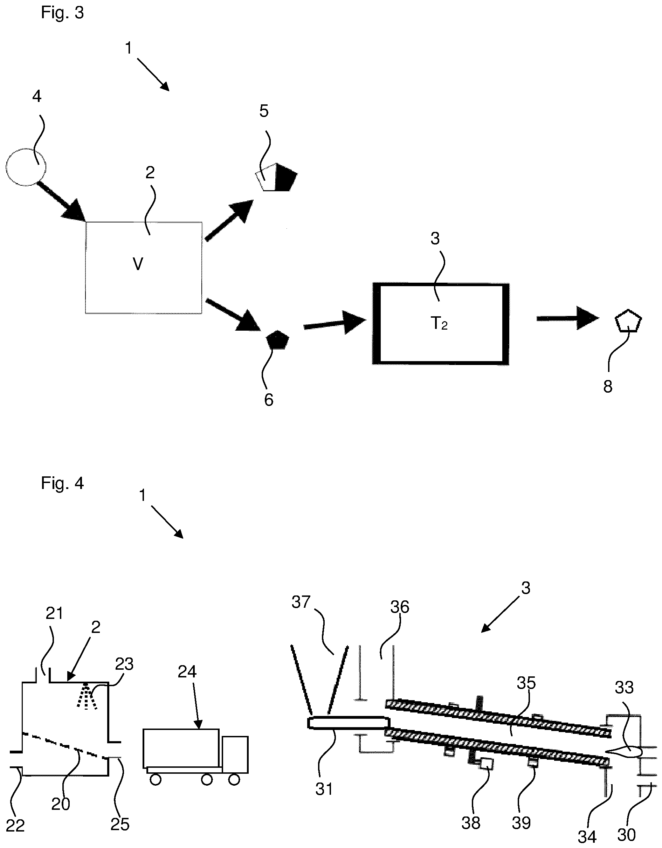

In Fig. 3 ist ein weiterer Verfahrensschritt dargestellt, der das in Fig. 1 dargestellte Verfahren ergänzt. Hierbei schließt sich an die Vorbehandlung V des Ausgangsmaterials 4 im Vorbehandlungsmodul 2, wobei die Abfallfraktion 6 abgetrennt wird, die Abfallstoffe und eine körnige Feinfraktion unter 1 mm umfasst, eine thermischen Reinigung T₂ der Abfallfraktion 6 an. Bei der thermischen Reinigung T₂ wird die mineralische bzw. gesteinsartige Feinfraktion dekontaminiert, indem die Abfallstoffe bei Temperaturen oberhalb 800 °C verbrannt werden. Für die dabei aus dem Verbrennungsrückstand erhaltene thermisch gereinigte mineralische bzw. gesteinsartige Feinfraktion 8 eröffnen sich durch die Entfernung der Abfallstoffe vorteilhaft Möglichkeiten zur Weiterverwendung alternativ zur Deponierung. Und selbst wenn keine Weiterverwendung erfolgt, so ist die Deponierung der thermisch gereinigten Feinfraktion deutlich einfacher und günstiger als die Entsorgung der zuvor mit Abfallstoffen belasteten Abfallfraktion 6.

Zur Durchführung dieser thermischen Reinigung T₂ der Abfallfraktion 6 kann dasselbe thermische Reinigungsmodul 3 wie zur thermischen Reinigung T₁ der vorgereinigten Kornfraktion 5 eingesetzt werden, wenn dieses zum Betrieb mit den jeweiligen Parametern, insbesondere den unterschiedlichen Temperaturen geeignet ist. Dann kann das thermische Reinigungsmodul 3 wahlweise und wechselweise zur thermischen Reinigung T₁ der vorgereinigten Kornfraktion 5 und zur thermischen Reinigung T₂ der Abfallfraktion 6 eingesetzt werden.

Fig. 2 zeigt vereinfacht eine zur Durchführung des Verfahrens (siehe Fig. 1) geeignete Vorrichtung 1 mit einem thermischen Reinigungsmodul 3, das einem Vorbehandlungsmodul 2 nachgeschaltet ist. Das Vorbehandlungsmodul 2 ist in diesem Fall ein nassmechanisches Reinigungsmodul mit einem Sieb 20, das von oben mit einem Reinigungsmedium 23 beaufschlagt wird. Durch einen Einlass 21 gelangt das zu reinigende Ausgangsmaterial 4 auf das Sieb 20, wo unter Einwirkung des Reinigungsmediums 23 die Abtrennung der Abfallstoffe enthaltenden Abfallfraktion 6 erfolgt, die zusammen mit dem Reinigungsmedium als Siebdurchgang durch den Abfallauslass 22 aus dem Vorbehandlungsmodul 2 ausgeschleust wird. Der Siebüberlauf umfasst die vorgereinigten Kornfraktionen 5, die zur Entfernung der Schadanhaftungen mit einer Überführungsvorrichtung 24 in das thermische Reinigungsmodul 3 gelangen. Die Überführungsvorrichtung 24 verbindet hier direkt das Vorbehandlungsmodul 2 mit dem thermischen Reinigungsmodul 3. Abweichungen zu dem hier symbolisch dargestellten Beispiel eines Vorbehandlungsmoduls 2 in jeglicher Beziehung sind möglich, sowohl was die Art der Vorbehandlung an sich als auch was die Ausführung zur nassmechanischen Reinigung betrifft. So sind nicht nur Alternativen in Bezug auf Anordnung von Sieb 20, Einlass 21, Auslass 22, und Anzahl und Anordnung der Reinigungsmediumzufuhr 23 denkbar, sondern auch alternative Vorbehandlungen durch Brechen, mechanische Reinigung etc.

Das thermische Reinigungsmodul 3 ist hier als kontinuierlich betriebener Durchlaufofen ausgebildet, der eine Fördervorrichtung 31 mit einem Wanderrost 32 aufweist. Die vorgereinigten Kornfraktionen 5 werden auf dem Wanderrost 32 durch den Brennraum 35 zu dem Auslass 34 transportiert, wobei die Korngröße der vorgereinigten Kornfraktionen 5 größer ist als die Abstände zwischen den beweglichen Gliedern des Wanderrosts 32. Im Brennraum 35 wird eine Temperatur im Bereich von 200 bis 800 °C eingestellt. Diese kann je nach vorhandenen Schadanhaftungen beispielweise im Bereich von 300 bis 700 °C liegen, oder auch etwa im Bereich von 400 bis 600 °C eingestellt werden. Dazu umfasst das thermische Reinigungsmodul 3 eine Heizvorrichtung, hier mit einem Brenner 33, der auch als Zündquelle fungiert. Diese Temperaturen reichen aus, um die Schadanhaftungen chemischer Verbindungen, die polare Phosphonsäureverbindungen, insbesondere Glyphosat und dessen Abbauprodukt Aminomethylphosphonsäure (AMPA), und/oder polyzyklische aromatische Kohlenwasserstoffe (PAK) umfassen, von den Kornoberflächen zu entfernen.

Denn Glyphosat und AMPA zersetzen sich bei Temperaturen oberhalb 230 °C bzw. 286,5 °C, und PAK haben meist einen Flammpunkt unter 200 bis 300 °C und eine Zündtemperatur unter 600 bis 700 °C.

Die symbolisierte Luft- bzw. Sauerstoffzufuhr 30 ermöglicht eine vollständige Verbrennung, sodass das durch den Abgasauslass 36 aus dem Brennraum 35 abgeführte Abgas wenig oder keine Nachbehandlung erfordert. Vorteilhaft ist durch die vergleichsweise niedrige Behandlungstemperatur sichergestellt, dass die so thermisch von den Schadanhaftungen gereinigten Kornfraktionen 7 das thermische Reinigungsmodul 3 ohne Gefügeänderung verlassen. Die Geschwindigkeit des Wanderrosts 32 ist einstellbar und dient zur Einstellung der Behandlungsdauer.

Nicht dargestellt ist eine Abwandlung der Vorrichtung 1 zur thermischen Reinigung der Abfallfraktion 6, wobei die Abfallfraktion von dem Abfallauslass 22 des Vorbehandlungsmoduls 2, ggf. nach Entfernung des Reinigungsmediums, in das thermische Reinigungsmodul 3 (oder ein zweites thermisches Reinigungsmodul) überführt wird, das dann mit der höheren Temperatur von über 800 °C zur Verbrennung der Abfallstoffe betrieben wird.

Zu der Abbildung in Fig. 2 sind alternative Ausführungen des thermischen Reinigungsmoduls 3 in Bezug auf die Fördervorrichtung und die Heizvorrichtung etc. denkbar. Zu einem Wanderrost 32 alternative Fördervorrichtungen sind bekannt, und ein chargenweise betriebenes Reinigungsmodul kann eine Umwälzvorrichtung anstelle einer Fördervorrichtung aufweisen. Auch sind Heizvorrichtungen mit von der symbolischen Darstellung abweichender Brenneranzahl und/oder Brenneranordnung oder mit alternativen Zündquellen möglich, ebenso wie zündquellenlose Heizvorrichtungen, wenn die Temperatur im thermischen Reinigungsmodul oberhalb der Flammtemperatur der Schadanhaftungen liegt. Ferner sind Abweichungen von der symbolischen Darstellung der Luftzufuhr 30 und des Abgasauslasses 36 zur Optimierung der Luftführung und Variationen in Bezug auf Gestaltung der Überführung 24 und des Auslasses 34 möglich.

Durch Einrichtung einer entsprechenden Überführungsvorrichtung 24 kann das thermische Reinigungsmodul 3 auch ohne weiteres bei bestehenden Anlagen nachgerüstet und den jeweilig vorhandenen Vorbehandlungsmodulen nachgeschaltet werden.

Fig. 4 zeigt eine weitere erfindungsgemäße Vorrichtung 1 mit einer alternativen Überführungsvorrichtung 24 und einem alternativen thermischen Reinigungsmodul 3. Das Vorbehandlungsmodul 2 entspricht dem aus Fig. 2, ohne dass der Auslass 25 für den Siebüberlauf mit einer direkten Überführungsvorrichtung 24 wie der in Fig. 2 verbunden ist. Die Überführungsvorrichtung 24 in Fig. 4 ist ein Lasttransportfahrzeug 24, das die vorgereinigten Kornfraktionen 5, die das Vorbehandlungsmodul 2 als Siebüberlauf durch den Auslass 25 verlassen, zu einem örtlich distanzierten, also indirekt nachgeschalteten thermischen Reinigungsmodul 3 transportiert.

Das thermische Reinigungsmodul 3 ist in diesem Beispiel als Drehrohrofen 3 ausgebildet, dessen Brennraum 35 von einem Drehrohr begrenzt wird, das in Bezug auf die Horizontale geneigt auf Lagern 39 angeordnet ist und von einem Antrieb 38 zur Drehung um die Rohrachse angetrieben wird. Durch die geneigte Anordnung und unter Einwirkung der Drehbewegung und der Schwerkraft wird das Material, das durch eine Zufuhrvorrichtung 37 am oberen Ende in den Brennraum 35 aufgegeben wird, nach unten zu dem Auslass 34 bewegt und gleichzeitig umgewälzt. Am Auslass 34 befinden sich hier in dem schematisch dargestellten Beispiel Luft- bzw. Sauerstoffzuführung 30 sowie Brenner 33. Der Abgasauslass 36 schließt sich an das obere Ende des Brennraums 35 an, durch den das Material und die Gase folglich im Gegenstrom geführt werden. Die Distanz zwischen der Zufuhrvorrichtung 37 und dem oberen Ende des Brennraums 35 wird durch eine Fördervorrichtung 31 überbrückt, auf der das Material den Abgasauslass 36 durchquert und dabei vorgewärmt wird. Zur Unterstützung der Umwälzbewegung des Materials und/oder zur Steuerung der Transportbewegung durch den Brennraum 35 kann das Drehrohr an der Innenseite mit Lenkstrukturen wie Schaufeln oder Stege etc. ausgestattet sein (nicht figurativ gezeigt).

Die Temperatur im Brennraum 35 wird abhängig von dem zu reinigenden Material eingestellt, das in diesem Beispiel mit einem Lasttransportfahrzeug 24 aus der Vorbehandlung in dem Vorbehandlungsmodul 2 angeliefert wird. Handelt es sich bei dem Material um die vorgereinigte(n) Kornfraktion(en) 5, wird der Drehrohrofen 3 mit einer Temperatur im Bereich von 200 bis 800 °C betrieben. Diese kann je nach vorhandenen Schadanhaftungen beispielweise im Bereich von 300 bis 700 °C liegen, oder auch etwa im Bereich von 400 bis 600 °C eingestellt werden. Falls die Abfallfraktion 6 gereinigt werden soll, wird der Drehrohrofen 3 mit einer Temperatur im Bereich von 800 bis 1.200 °C betrieben. Die Temperatureinstellung kann beispielsweise durch Anzahl der betriebenen Brenner, Brennstoffzufuhr und/oder Luft- bzw. Sauerstoffzufuhr gesteuert werden. Die Behandlungsdauer bzw. die Geschwindigkeit, mit der das Material den Brennraum 35 durchquert, kann durch Steuerung der Neigung des Drehrohrs und dessen Drehgeschwindigkeit eingestellt werden.

Ferner ist es auch möglich, als thermisches Reinigungsmodul einen Drehrohrofen einzusetzen, der von dem dargestellten Beispiel abweicht, beispielsweise durch Gleichstrombetrieb oder indirekte Beheizung etc.

Ferner soll eine erfindungsgemäße Vorrichtung nicht auf die dargestellten Kombinationen von Vorbehandlungsmodul, Überführungsvorrichtung und Reinigungsmodul beschränkt sein. D. h., dass direkte und indirekte Nachschaltung nicht mit einer bestimmten Art des thermischen Reinigungsmoduls wie dargestellt gekoppelt sein müssen. Anders als dargestellt, ist es auch möglich, dass ein Drehrohrofen direkt einem Vorbehandlungsmodul nachgeschaltet ist, und umgekehrt, dass ein Durchlaufofen indirekt, z. B. über ein Transportfahrzeug als Überführungsvorrichtung, mit einem Vorbehandlungsmodul verbunden sein kann.

Unterschiedliche Kombinationen verschiedener Ausführungen eines thermischen Reinigungsmoduls mit unterschiedlichen Überführungsvorrichtungen sind denkbar. Die Art des Reinigungsmoduls und die Art der Überführungsvorrichtung können sich eher nach der Größe der zu behandelnden Materialströme bzw. der dafür erforderlichen Anlagenkapazitäten richten.

### BEZUGSZEICHENLISTE

- 1: Vorrichtung
- 2: Vorbehandlungsmodul
- 3: thermisches Reinigungsmodul
- 4: Ausgangsmaterial/Aushubmaterial
- 5: vorgereinigte Kornfraktion(en)
- 6: Abfallfraktion
- 7: thermisch gereinigte Kornfraktion(en)
- 8: thermisch gereinigte Feinfraktion
- 20: Sieb
- 21: Einlass
- 22: Abfallauslass
- 23: Zufuhr Reinigungsmedium
- 24: Überführungsvorrichtung
- 25: Auslass
- 30: Zufuhrvorrichtung Luft/Sauerstoff
- 31: Fördervorrichtung
- 32: Wanderrost
- 33: Zündquelle/Brenner
- 34: Auslass
- 35: Brennraum
- 36: Abgasauslass
- 37: Materialzufuhrvorrichtung
- 38: Antrieb
- 39: Lager
- V: Vorbehandlung
- T₁: thermische Reinigung
- T₂: thermische Reinigung

## Patentansprüche

1. Verfahren zur Aufbereitung eines Ausgangsmaterials (4), das zumindest eine mineralische und gesteinsartige Kornfraktion aufweist,
umfassend die Schritte
- Vorbehandeln (V) des Ausgangsmaterials (4) zumindest durch mechanisches und/oder nassmechanisches Reinigen des Ausgangsmaterials (4) unter Abtrennen zumindest einer Abfallfraktion (6), dabei
- Erhalten zumindest einer vorgereinigten mineralischen und/oder gesteinsartigen Kornfraktion (5) mit Schadanhaftungen bestehend aus chemischen Verbindungen, die adhäsiv oder adsorptiv an Oberflächen der mineralischen und/oder gesteinsartigen Kornfraktion (5) gebunden und/oder in Reinigungsmedien schlecht löslich sind und sich daher durch das mechanische und/oder nassmechanische Reinigen nicht entfernen lassen,
- thermisch Reinigen (T₁) der vorgereinigten Kornfraktion (5) unter Zufuhr von Luft oder Sauerstoff bei einer Temperatur in einem Bereich von 200 bis 800 °C, und Entfernen der Schadanhaftungen chemischer Verbindungen von den Oberflächen der mineralischen und/oder gesteinsartigen Kornfraktion (5) durch Zersetzung und/oder Verbrennung, wobei ein Korngefüge der mineralischen und/oder gesteinsartigen Kornfraktion (5) unverändert bleibt,
- Erhalten der thermisch gereinigten mineralischen und/oder gesteinsartigen Kornfraktion (7), die zur Wiederverwendung geeignet ist.

2. Verfahren nach Anspruch 1, wobei die chemischen Verbindungen polare Phosphonsäureverbindungen, insbesondere Glyphosat und dessen Abbauprodukt Aminomethylphosphonsäure (AMPA), und/oder polyzyklische aromatische Kohlenwasserstoffe (PAK) umfassen.

3. Verfahren nach Anspruch 1 oder 2, wobei die Temperatur der thermischen Reinigung (T₁)
- in Abhängigkeit einer Art und Menge der Schadanhaftungen mit einer Behandlungsdauer abgestimmt ist, und/oder
- in einem Bereich von 200 bis 700 °C, bevorzugt von 200 bis 600 °C, oder in einem Bereich von 300 bis 800 °C, 300 bis 700 °C, oder 300 bis 600 °C, liegt.

4. Verfahren nach zumindest einem der Ansprüche 1 bis 3, wobei das Vorbehandeln (V) des Ausgangsmaterials (4) ferner zumindest einen Bearbeitungsschritt aus der Gruppe umfassend Sieben, Fraktionieren, Brechen und Klassieren umfasst, und dabei
mehrere vorgereinigte mineralische und/oder gesteinsartige Kornfraktionen (5) mit unterschiedlichen Korngrößen erhalten werden, die entweder zusammen oder nach Fraktionen getrennt der thermischen Reinigung (T₁) unterzogen werden, wobei bei getrennter thermischer Reinigung (T₁) die Behandlungstemperatur und/oder eine Behandlungszeit an die Korngröße der jeweiligen Kornfraktion (5) angepasst wird.

5. Verfahren nach zumindest einem der Ansprüche 1 bis 4, wobei die zumindest eine durch das mechanische und/oder nassmechanische Reinigen abgetrennte Abfallfraktion (6) eine mineralische und/oder gesteinsartige Feinfraktion und zumindest einen nicht wiederverwendbaren Abfallstoff mit einer Korngröße aufweist, die kleiner ist als eine Korngröße der vorgereinigten Kornfraktion (5).

6. Verfahren nach Anspruch 5, ferner umfassend den Schritt
- thermisch Reinigen (T₂) der zumindest einen Abfallfraktion (6) unter Zufuhr von Luft oder Sauerstoff bei einer Temperatur, die zur Verbrennung des zumindest einen nicht wiederverwendbaren Abfallstoffs, bevorzugt in einem Bereich von 800 bis 1.200 °C, ausgewählt ist, und aus einem Verbrennungsrückstand Erhalten einer thermisch gereinigten Feinfraktion (8), die arm an oder frei von dem zumindest einen nicht wiederverwendbaren Abfallstoff ist.

7. Verfahren nach zumindest einem der Ansprüche 1 bis 6, wobei das thermische Reinigen (T₁) der vorgereinigten Kornfraktion (5) in einem kontinuierlich oder chargenweise betriebenen thermischen Reinigungsmodul (3) durchgeführt wird.

8. Verfahren nach Anspruch 6 und 7, wobei das thermische Reinigen (T₂) der zumindest einen Abfallfraktion (6)
- in dem kontinuierlich oder chargenweise betriebenen thermischen Reinigungsmodul (3) abwechselnd mit dem thermischen Reinigen (T₁) der vorgereinigten Kornfraktion (5) unter Einstellung der Temperatur in dem jeweils vorgesehenen Bereich durchgeführt wird, oder
- in einem weiteren kontinuierlich oder chargenweise betriebenen thermischen Reinigungsmodul (3) durchgeführt wird.

9. Verfahren nach Anspruch 7 oder 8, wobei
- im kontinuierlichen Betrieb die vorgereinigte Kornfraktion (5) durch das thermische Reinigungsmodul (3) gefördert wird, das als Drehrohrofen oder als Durchlaufofen mit einer Fördervorrichtung ausgebildet ist, die ein Wanderrost, ein Treppenrost, ein Schüttrost oder ein Walzenrost ist,
- im chargenweisen Betrieb die vorgereinigte Kornfraktion (5) in dem thermischen Reinigungsmodul (3) umgewälzt wird, das als Ofenvorrichtung bevorzugt mit einer Vorrichtung zur Umwälzung der vorgereinigte Kornfraktion (5) ausgebildet ist.

10. Vorrichtung (1) zur Durchführung eines Verfahrens nach zumindest einem der Ansprüche 1 bis 9, zur Aufbereitung eines Ausgangsmaterials (4), das zumindest eine mineralische und/oder gesteinsartige Kornfraktion aufweist,
**dadurch gekennzeichnet, dass**
die Vorrichtung (1) ein thermisches Reinigungsmodul (3) aufweist, das dazu ausgebildet ist, zumindest eine vorgereinigte Kornfraktion (5) unter Zufuhr von Luft oder Sauerstoff bei einer Temperatur in einem Bereich von 200 bis 800 °C durch Zersetzung und/oder Verbrennung der Schadanhaftungen chemischer Verbindungen von den Oberflächen der Kornfraktion (5) thermisch zu reinigen,
wobei das thermische Reinigungsmodul (3) einem Vorbehandlungsmodul (2) direkt oder indirekt nachgeschaltet ist, das dazu ausgebildet ist die zumindest eine vorgereinigte Kornfraktion (5) zumindest durch mechanisches und/oder nassmechanisches Reinigen des Ausgangsmaterials (4) unter Abtrennen zumindest einer Abfallfraktion (6) bereitzustellen.

11. Vorrichtung nach Anspruch 10,
**dadurch gekennzeichnet, dass**
das thermische Reinigungsmodul (3) eine Heizvorrichtung mit oder ohne Zündquelle und eine Zufuhrvorrichtung für Luft oder Sauerstoff aufweist und zum kontinuierlichen oder chargenweisen Betrieb ausgebildet ist.

12. Vorrichtung nach Anspruch 10 oder 11,
**dadurch gekennzeichnet, dass**
das thermische Reinigungsmodul (3)
- zum kontinuierlichen Betrieb als Drehrohrofen oder als Durchlaufofen mit einer Fördervorrichtung ausgebildet ist, die ein Wanderrost, ein Treppenrost, ein Schüttrost oder ein Walzenrost ist, und
- zum chargenweisen Betrieb als Ofenvorrichtung bevorzugt mit einer Vorrichtung zur Umwälzung der vorgereinigte Kornfraktion (5) ausgebildet ist.

13. Vorrichtung nach zumindest einem der Ansprüche 10 bis 12,
**dadurch gekennzeichnet, dass**
- das thermische Reinigungsmodul (3) ein zumindest hinsichtlich der Temperatur steuerbares thermisches Reinigungsmodul (3) ist, das ferner dazu ausgebildet ist, die zumindest eine Abfallfraktion (6) unter Zufuhr von Luft oder Sauerstoff bei einer Temperatur, die zur Verbrennung des nicht wiederverwendbaren Abfallstoffs, bevorzugt in einem Bereich von 800 bis 1.200 °C, ausgewählt ist, durch Verbrennung der Abfallstoffe thermisch zu reinigen,
oder
- die Vorrichtung (1) ein weiteres dem Vorbehandlungsmodul (2) direkt oder indirekt nachgeschaltetes thermisches Reinigungsmodul (3) aufweist, das dazu ausgebildet ist, die zumindest eine Abfallfraktion (6) unter Zufuhr von Luft oder Sauerstoff bei einer Temperatur, die zur Verbrennung des nicht wiederverwendbaren Abfallstoffs, bevorzugt in einem Bereich von 800 bis 1.200 °C, ausgewählt ist, durch Verbrennung der Abfallstoffe thermisch zu reinigen.
